# EUROPEAN PATENT SPECIFICATION

(11) **EP 2 964 453 B1**
(45) Date of publication and mention of the grant of the patent: **11.09.2019**
(21) Application number: 14710965.6
(22) Date of filing: 27.01.2014
(51) Int. Cl.: B29D 30/30, B29D 30/42, B29D 30/38

(54) **TYRE FOR VEHICLE WHEELS WITH AN IMPROVED DISTRIBUTION OF LOADS IN THE CARCASS STRUCTURE**
REIFEN FÜR FAHRZEUGRÄDER MIT EINER VERBESSERTEN KRAFTVERTEILUNG IN DER KARKASSSTRUKTUR
PNEU POUR ROUES DE VÉHICULE AVEC UNE DISTRIBUTION DES FORCES AMÉLIOREÉ DANS LA STRUCTURE DE LA CARCASSE

(30) Priority: 06.03.2013 IT MI20130337; 29.03.2013 US 201361806657 P
(43) Date of publication of application: 13.01.2016
(73) Proprietor: Pirelli Tyre S.p.A., 20126 Milano (IT)
(72) Inventor: MANCINI, Gianni, I-20126 Milano (IT); AMURRI, Cesare Emanuele, I-20126 Milano (IT); BIZZI, Stefano, I-20126 Milano (IT); GIAMBELLI, Roberta, I-20126 Milano (IT)
(74) Representative: Brasca, Marco
(86) International application number: PCT/IB2014/058574
(87) International publication number: WO 2014/135995

(56) References cited:
- EP-A1- 1 816 011
- WO-A1-2009/068939
- DE-A1- 3 740 827
- JP-A- H03 204 306
- JP-A- 2007 099 088
- JP-A- 2009 113 591
- JP-A- 2010 208 090
- KR-A- 20120 088 489
- US-A- 1 454 469
- US-A- 4 261 393

## Description

The present invention has as object a tyre for vehicle wheels.

A tyre for vehicle wheels generally comprises a carcass structure comprising at least one carcass ply having axially opposite end flaps engaged with respective annular anchoring structures, integrated in the areas normally identified with the name of "beads". The carcass structure is usually associated with a belt structure comprising one or more belt layers, radially superimposed with respect to each other and with respect to the carcass ply. In a radially external position with respect to the belt structure is applied to a tread band made of an elastomeric material, like other semi-finished products constituting the tyre. On the lateral surfaces of the carcass structure, each being extended from one of the lateral edges of the tread band up to the respective annular anchoring structure to the beads, respective sidewalls made of elastomeric material are also applied. Following the building of the green tyre carried out by assembling respective semi-finished products a moulding and vulcanisation treatment is generally carried out with the aim of determining the structural stabilisation of the tyre by means of the crosslinking of the elastomeric material as well as impressing a desired tread design on the tread band and possible graphic indicia on the sidewalls.

With the term "elastomeric material" it is intended a composition comprising at least one elastomeric polymer and at least one reinforcement filler. Preferably, such composition also comprises additives such as cross-linking agents and/or plasticization agents. Due to the presence of the cross-linking agents, through heating such material can be cross-linked, so as to form the final manufactured product.

With the term "strip-like element" it is intended an elongated manufactured product cut to size having a profile of flat transverse section and comprising one or more cords made of textile and/or metallic material, which are extended parallel to the longitudinal development of the strip-like element itself and embedded or at least partially covered by at least one layer made of elastomeric material. Generally each strip-like element is deposited in a mutually approached relationship, for example in the case of strip-like elements which contribute for example to the formation of carcass ply/plies, belt strip(s) and some types of reinforcements. Preferably, such deposition in a mutually approached relationship takes place on a substantially cylindrical, and/or substantially toroidal, and/or substantially planar deposition surface.

With the term "radial section" of the sidewall and of the tyre it is intended that which lies on a radial plane, that is a plane containing the main or rotation axis of the tyre.

With the term "average diameter" of a cord it is intended the average of the diameters of the circumferences circumscribed around a plurality of sections chosen along the length of the cord. The above definition is here introduced because a cord usually does not exhibit a perfectly circular section (being generally composed of a plurality of threads), moreover its cross section can vary slightly along its longitudinal development.

Document US4261393 describes a fabric for tyres suitable for the reinforcement of rubber articles comprising a plurality of elements, each containing a plurality of warp cords and weft yarns. Each element has end portions and a central portion. The joints between the elements are formed by overlapping opposite end portions of adjoining elements with each other with the warp cords arranged in side by side relationship. The warp cords located at the ends have a smaller diameter than the diameter of the other warp cords place in the central portion.

Document EP1350616 describes a method for obtaining a structural element of a tyre, such as the carcass structure, which provides for manufacturing a continuous strip of predefined width provided with cords, cutting the strip into lengths and subsequently depositing a predetermined number of lengths on a forming drum joining them by overlapping lateral edges of adjoining lengths in order to form the structural element. The lateral edges of the length have a small thickness so as to avoid enlargements at the joints.

Document EP1674246 describes a method of making a carcass ply wherein a continuous strip of rubber reinforced with cords is formed and subsequently cut into segments, each provided with a predefined width and length. Lateral edges of adjacent segments are joined together on a building drum in order to form the ply. The segments have, at their lateral edges, fins provided with a small thickness so that, when the segments are joined to each other, the final ply thickness is uniform.

Document EP1510331 describes a method for fabricating a component of a tyre, such as a carcass ply. The method provides for forming a narrow belt by arranging a plurality of cords and embedding the cords in a rubber layer, cutting the belt into strips of a predetermined length and successively arranging and joining a certain number of strips such that lateral portions of adjoining strips overlap each other, with the outermost cord of a strip overlying the outermost cord of the adjacent strip. The lateral portions of each strip are shaped, as seen in section, as an isosceles triangle.

Document US4214620 in the name of the same Applicant describes a tyre for vehicles which comprises a carcass provided with substantially radial cords, a first strip of inclined metal cords arranged in the bead area and in the lower part of the sidewall and an axially outer second strip with cords inclined in an opposite sense to the cords of the first strip, so as to eliminate sidewall deformations when the tyre runs at high speed along a curve.

Document EP0483710 in the name of the same Applicant describes a radial tyre comprising one or more carcass plies folded back around the beads. The tyre is provided with a reinforcement ply disposed at each sidewall and axially outer with respect to the carcass ply. The reinforcement ply comprises textile cords inclined at an angle in the range of 30° to 60° with respect to the radial direction.

WO 2008/099236 in the name of the same Applicant, illustrates the application of a carcass ply around an outer surface of a building drum, according to an application diameter greater than the fitting diameter of the tyre. An outer sleeve comprising at least one belt structure possibly associated with a tread band is arranged at a coaxially centred position around the carcass sleeve applied onto the building drum. By axial approaching of two halves forming the building drum, the carcass sleeve is shaped according to a toroidal configuration to determine application of same against a radially internal surface of the outer sleeve. The application of said at least one carcass ply can be carried out through application of a plurality of strip-like elements disposed in succession along the circumferential extension of the outer surface of the building drum.

Document JP2010-208090 discloses a manufacturing method of a ply material comprising a cutting process involving cutting long band-shaped plies configured by rubber-coating a plurality of cords arranged in parallel into predetermined lengths to obtain strip-form plies and a joining process involving arranging strip-form plies width wise and successively joining them, wherein, strip-form ply comprises a body positioned at the centre width wise as well as a joining part that is thinner than said body, positioned on both sides thereof, and comprising a cord configuration with a lower modulus than the cord configuration of the body, wherein, in said joining process, one joining part of the mutually adjacent strip-form plies overlaps the other joining part for the purpose of joining them. Document JP2007-99088 discloses a manufacturing method of a ply. The ply is configured from a plurality of ply pieces in which a plurality of cords are embedded in rubber. The ply comprises joining parts in which ends of ply pieces are connected to each other. Each end is embedded with first cord having a smaller mass than the mass of second cord embedded in places other than ends. Joining part is molded by overlapping ends with each other to mold overlapping part and subsequently clamping overlapping part.

Document KR2012-0088489 discloses a carcass formation process wherein a toroidal carcass is formed by sequentially adhering, on a rigid core, in the circumferential direction of the tyre, a plurality of strip plies coated with topping rubber. The strip plies are arranged so that the edge parts of the strip plies that neighbour one another in the tyre circumferential direction are arranged so as to be adjacent or nearby without overlapping on the tread part. In the sidewall part, triangular overlapping parts are formed.

Document EP1816011 discloses a reinforcement layer for UHP pneumatic tyres with radial construction. Two adjacent reinforcement layer sections are arranged overlapping their mutually facing edge areas and, on at least one edge of the overlapping reinforcement layer section, a seam is formed. In the seam, the reinforcement members have a smaller diameter than the reinforcement members outside the seam.

Document JP 2009 113591 discloses a carcass layer formed so that a carcass material, constituted of a large number of carcass cords arranged in parallel to one another and of a coat rubber covering those carcass cords, is wound in a tire circumferential direction and an end in the winding direction is lap-spliced. A plurality of the carcass cords having the same diameters are positioned at a lap-spliced portion and the diameters of these carcass cords are smaller than the diameter of the carcass cord positioned at a portion other than lap-spliced portion.

The Applicant observed that high performance tyres provided at the sidewalls with at least two axially superimposed carcass layers adapted to stiffen its structure, such as for example those described in the documents US4214620 or EP0483710, still exhibit criticalities related to the high loads to which they are subjected when mounted on today's ultra high performance cars.

In fact, the powers and torques of engines (internal combustion engines possibly associated with electric engines (such as devices for kinetic energy recovery "KERS")), the braking powers, aerodynamic efficiency and weights of current cars of the "supercar" type (such as Lamborghini, Ferrari, etc., used on racetracks in particular) can generate high stresses/deformations in the tyres, deriving from the very high drive torques, from the very high braking torques, from the high aerodynamic loads, from the sudden load transfers in a curve allowed by the extremely high lateral grip (capable of generating lateral accelerations of up to 2 g). In high performance rear-wheel drive cars with engine and gearbox located in the rear (for example of the Berlinetta type) the most stressed tyres are the rear tyres during acceleration, when deflections due to the load shift towards the rear add up to the deformations due to the driving torque. Cars of the type mentioned above are capable of transferring torque values of up to 1000 nm to the tyres with vertical loads of up to 1000 Kg in acceleration.

The Applicant has verified that the deformations deriving from such stresses greatly influence the performance of the tyre and hence of the car, in particular the handling and the efficiency with which the torques in acceleration and braking are discharged to the ground.

In particular, the Applicant has perceived that such performances are influenced by the deformations which the sidewall portions of the tyre are subjected to as they cyclically pass in proximity to the contact area of the tyre with the ground. During the deflection of the portion of the tyre located close to the ground and the outward bulging of the mentioned sidewall portions, the carcass plies located at said sidewalls are subjected to complex stresses.

The Applicant has nevertheless observed that, up to certain load values exerted on the tyre, the cords of both layers of the carcass plies located on the sidewalls work properly under tension, thereby carrying out their structural function and ensuring the desired rigidity.

The Applicant has observed that there exists a stress limit beyond which, while the cords of the axially outer ply layer of the sidewall continue to be subjected to traction, the tension in the cords of the axially inner ply tends to zero, so that they are no longer able to offer any resistance. The tyre in those conditions behaves like a single-ply tyre with an effective rigidity much lower that the designed rigidity. The Applicant has perceived that this behaviour is due to the shifting outwardly of the neutral axis (axis in which the torques are zero) of the radial section of the sidewall due to the deformation of the same during sudden manoeuvres (load transfers on track) and/or due to the interference with irregularities of the road surface (holes, obstacles) which instantly lead to an increased deflection of the tyre. Said neutral axis is situated inside the radial section of the sidewall of the tyre and outside the carcass structure in load conditions that are not critical, when the neutral axis shifts outwardly and reaches the axially inner layer of the carcass ply, said layer substantially does not work anymore and it is as if it did not exist. In other words, with a sudden increase of the load, the cords of the axially outer ply layer increase their tension while the cords of the axially inner ply layer decrease their tension until reaching values close to zero or even entering in compression. When the ply layer approaches compression, it does not work as a tension member anymore giving rise to a situation of instability since the rigidity of the sidewall suddenly decreases, the deflection increases until a new geometric configuration of equilibrium is found with same load applied.

The Applicant has further observed that the greater is the thickness of the carcass structure, i.e. of the adjacent plies supporting the loads, the greater such problem becomes, that is, the behaviour described above is manifested with smaller stresses since the moment of inertia of the section is greater.

In this context, the Applicant has set itself the objective of improving the performances of tyres for cars, in particular tyres intended to equip high and ultra high performance cars, with particular reference to: handling, driving precision, power grounding efficiency, ride comfort, braking efficiency and fatigue resistance of the tyre structure.

The Applicant in particular set itself the objective of improving the performance of high range tyres built with production processes of the type illustrated in WO 2008/099236 wherein the realization of the carcass ply can take place through the joining with overlap of a plurality of strip-like elements in circumferential side by side relationship on a shaping support, wherein the overlap serves to ensure the perfect seal of the joint upon shaping (radial dilatation) of the carcass structure. The Applicant has in fact perceived that the overlap areas of the strip-like elements, having a greater thickness than the remaining parts of the carcass ply, determine an increase of the moment of inertia of the section. It follows that in those areas, with the same total tension, there is a greater increase of the tension on the axially outer ply and a decrease in tension in the axially inner ply and therefore the tension of the axially inner ply tends to zero, reaching the instability limit, with a lower load applied on the tyre. During driving, if a manoeuvre is effected leading to instantaneously increasing the deflection of the tyre when a joint is close to or at the footprint, there is a reaction of the tyre which is perceived by the driver and calls for the execution of small correction manoeuvres. Consequently this leads to a waste of time (on track) and in any case to a lack of confidence by the driver.

The Applicant has perceived that in the tyres with carcass ply having strip-like elements in circumferential side by side relationship and partly superimposed it is necessary to reduce the thickness of the overlap zones, since they constitute areas of criticality in the extreme loading conditions described above, but at the same time it is necessary to ensure the continuity and structural uniformity of the carcass ply.

The Applicant has found that this objective can be attained by making strip-like elements wherein the two lateral longitudinal portions of each strip-like element exhibit a reduced thickness and at said lateral portions one or more end cords are present having an average diameter smaller than the remaining cords of the strip-like element itself. In other words, the end cords exhibit an area of smaller section than the section area of the central cords of the strip-like element itself.

The strip-like elements are then approached by overlapping the lateral longitudinal portion with reduced thickness of a strip-like element on the lateral longitudinal portion with reduced thickness of the adjacent strip-like element, so that the overall thickness of the joint is substantially equal or in any case close to the thickness of the central portions of the strip-like elements and that the end cords of a strip-like element are substantially superimposed on the end cords of the other. With the term "substantially equal" thickness of the joint between two adjacent strip-like elements it is preferably intended a thickness in the range from about 120% and about 180% of the thickness of each strip-like element, more preferably in the range between about 130% and about 170%.

In an aspect, the present invention relates to a tyre for vehicle wheels according to claim 1.

The Applicant deems that the use of second end cords (i.e. located at the ends of the strip-like element) having a smaller average diameter, that is with a cross section area thereof smaller than the cross section area of the first cords belonging to the central portion of the strip-like element and the thinning (reduced thickness) of the lateral longitudinal portions of the strip-like elements jointly allow obtaining joints (corresponding to the overlap areas between adjacent strip-like elements) with a thickness similar or substantially equal to the thickness of the rest of the carcass ply and avoiding the increase in the moment of inertia of the section which would lead to a critical shift of the neutral axis according to that described above.

In fact, the adoption of the second end cords of smaller average diameter, allows further thinning the lateral longitudinal portions without the risk that the cords remain uncovered. Due to the thinning of the lateral longitudinal portions, the quantity of elastomeric component blend in the joint is close to the quantity of elastomeric component blend in the other areas of same extension of the carcass ply and the reduced bulk of the second end cords in the joint corresponds or is slightly greater than the bulk of the cords belonging to the central portion in the other areas of same extension of the carcass ply. Moreover, the structural properties provided by the set of the second end cords and by the elastomeric component blend in the joint are similar to or slightly different from the structural properties provided by the set of cords belonging to the central portion and by the elastomeric component blend in the other areas of same extension of the carcass ply.

The present invention, in the previously mentioned aspects, can have one or more of the preferred characteristics described hereinbelow.

In a preferred embodiment, it is provided for the joints of the two superimposed layers of said at least one carcass ply to be offset.

In another preferred embodiment it is provided for the joints of the two superimposed layers of said at least one carcass ply to be crossed.

In this manner, even if the thickness of the joints is not exactly the same as the thickness of the rest of the ply, by avoiding the superimposition of the joints for the entire length thereof, a more uniform distribution of the geometric and structural characteristics of the carcass is still obtained.

In one embodiment, it is provided for the sum of the longitudinal modulus of elasticity, measured at an elongation corresponding to the operation conditions of the tyre, of two superimposed second cords to be maintained lower than or equal to about 1.5 times the modulus of elasticity of a first cord at the same elongation. In another embodiment it is provided for the sum of the longitudinal modulus of elasticity, measured at an elongation corresponding to the operation conditions of the tyre, of two superimposed second cords to be maintained substantially equal to the modulus of elasticity of a first cord at the same elongation.

In this manner, two second end cords lying substantially superimposed in a joint have a same or similar structural behaviour to a first cord belonging to the central portion of the strip-like element, providing the joints with structural properties that are the same or similar to the rest of the carcass ply. In other words, two superimposed cords of smaller average diameter, hence "smaller", substantially behave like one single "greater" cord of greater average diameter.

In one embodiment, which is not part of the invention, the formation of the strip-like elements comprises:
laying the first cords and the second cords parallel to each other;
applying on said first cords and on said second cords an elastomer material for forming a continuous elongated element;
cutting the continuous elongated element into lengths in order to obtain said strip-like elements; wherein, during application of the elastomer material, the first cords and the second cords are subject to a pull corresponding to a processing elongation; said processing elongation being comprised between about 0.5% and about 2%. The continuous elongated element is preferably obtained by means of extrusion or calendering, during which processes the cords are subjected to a stretch involving a processing elongation of the same coherent with the longitudinal elastic modulus thereof.

Preferably, a second cord exhibits a second average diameter comprised between about 40% and about 95% of the first average diameter of a first cord, more preferably comprised between about 50% and about 85%.

Preferably, a second end cord exhibits an average diameter comprised between about 0.4 mm and about 1 mm. A first cord belonging to the central part of the strip-like element exhibits an average diameter comprised between about 0.55 mm and about 1.2 mm.

Such dimensions allow obtaining a good compromise between the bulk of the second end cords, not excessive in the joint (such as to generate joints with a thickness which is substantially equal or in any case not too far from the rest of the carcass ply) and the rigidity offered by pairs of said second end cords comparable to that provided by a first cord belonging to the central portion of the strip-like element.

Each strip-like element preferably exhibits a width comprised between about 10 mm and about 400 mm more preferably comprised between about 25 mm and about 80 mm.

Preferably, each strip-like element has a maximum thickness, measured in the central part, comprised between about 0,6 mm and about 2,5 mm, more preferably comprised between about 0,9 mm and about 1,8 mm.

When using cords with the parameters indicated above, when the tyre is in use at the operating pressure (preferably comprised between about 1.5 and about 3 bar), the second end cords, of lower average diameter, though coupled two by two in the joints, provide the carcass with a rigidity similar to that provided by the single first cords belonging to the central portion of the strip-like element, that are bigger i.e. of greater average diameter. The rigidity of the carcass structure in conditions of use of the tyre is therefore substantially uniform along the entire circumferential development of the tyre itself.

Preferably, each of the lateral longitudinal portions of each strip-like element comprises a plurality of second cords in a side by side relationship.

Preferably in each joint the second cords of adjacent strip-like elements are superimposed.

Preferably, the joint comprises from 1 to 10, preferably from 1 to 5, second end cords per strip-like element substantially superimposed two-by-two.

In this manner, the joint is wider and it is formed by a plurality of pairs of second end cords allowing a better seal of the joint itself during shaping of the carcass structure upon assembly and during moulding upon vulcanisation.

Preferably, the density of the first cords in the strip-like element is comprised between about 45 cords/dm and about 150 cords/dm, more preferably between about 60 and about 110 cords /dm.

In one embodiment, the first cords and the second cords are manufactured using a same material. The use of the same material, although with differing size between the first cords and the second cords, allows making several properties even, such as hygroscopicity, thermal stability, fatigue behaviour, etc.

Preferably, the first cords are manufactured with a material selected from a group comprising: Rayon, Nylon, Polyester and hybrid materials composed of different materials (for example Nylon/Aramid).

Preferably, the second cords are manufactured with a material selected from a group comprising: Rayon, Nylon, Polyester and hybrid materials composed of different materials (for example Nylon/Aramid).

These materials are used in high performance and ultra-high performance tyres to ensure a high rigidity even with operating pressures (preferably comprised between about 1.5 and about 3 bar) typical of tyres used on track in order to increase the cornering grip and in which the instability phenomenon described above is due to the shifting of the neutral axis inside the carcass structure. According to an embodiment, the tyre comprising two carcass plies. In this embodiment, the superimposed carcass ply layers located at the sidewalls each belong to one of the two carcass plies which are radially superimposed and which each extends from a bead to the opposite bead.

According to an embodiment, the axially opposite end flaps of said at least one carcass ply lie turned up against said carcass ply at the sidewalls such as to form said two superimposed layers. In this embodiment, each end flap of the carcass ply is borne on the sidewall and rested against the same carcass ply of which it is part extending up to the tread band.

Preferably, the tyre comprises a single carcass ply and the superimposed ply layers located at the sidewalls both belong to the same carcass ply.

In one embodiment, the first cords and the second cords form an angle that is different from 90° with respect to a circumferential direction of the tyre.

Preferably, le first cords and the second cords form an angle, with respect to a circumferential direction of the tyre, comprised between about 60° and about 120°. Preferably, said angle is comprised between about 70° and about 110°, more preferably about 87°.

The inclination of the cords of the carcass ply/plies allows conferring the tyre a greater rigidity during torque transmission (upon braking or acceleration) between the hub and the tread band.

In one embodiment, the first cords and the second cords of a first carcass ply are crossed with the first cords and the second end cords of a second carcass ply. In this embodiment with crossed plies, the rigidity is maximised both in braking and in acceleration.

Moreover it was confirmed that the technique of keeping a more internal neutral axis is effective also on tyres with 90° plies even if the performances under torque are lower but with an advantage in terms of comfort.

In accordance with one embodiment which is not part of the invention, each of the lateral longitudinal portions exhibits, in a transversal section to the longitudinal development of the strip-like element, a triangular tapered profile. Such a shape is easy to produce and still ensures a good coupling between adjacent strip-like elements.

In accordance with the invention, each of the lateral longitudinal portions exhibits, in a transversal section to the longitudinal development of the strip-like element, said at least one connecting step between the respective lateral longitudinal portion and the central part of said strip-like element.

The thickness of the lateral longitudinal portion delimited by said step is preferably comprised between about 40% and about 95% of the thickness of the central part of the strip-like element and it is preferably comprised between about 50% and about 70% of the thickness of the central part of the strip-like element. Such a shape ensures a better coupling between adjacent strip-like elements than the previous one. Moreover, since there is one step on each longitudinal portions and the two longitudinal portions of a single strip-like element are asymmetrical, the coupling allows obtaining a thickness substantially equal to that of the central part of the strip-like element.

Further characteristics and advantages will emerge more clearly from the detailed description of a preferred but no exclusive embodiment of a tyre for vehicle wheels in accordance with the present invention, of a process for building tyres for vehicle wheels which is not part of the present invention and of a method for optimizing the distribution of loads in the carcass structure of a tyre which is not part of the present invention.

This description will be set out hereinafter with reference to the accompanying drawings, given only for indicative purposes and, therefore, not limiting, in which:
- figure 1 shows in a perspective view a semi-diametral section of a tyre according to the present invention, with interrupted sidewall in order to better illustrate the carcass structure;
- figure 1a is an enlargement of a portion of the semi-section of figure 1;
- figure 2 shows in a perspective view a semi-diametral section of a different tyre according to the present invention, with interrupted sidewall in order to better illustrate the carcass structure;
- figure 3 schematically illustrates in a front perspective view a forming drum with several strip-like elements deposited;
- figure 4 shows a schematic top view of the drum of figure 3 with strip-like elements of a first and a second layer;
- figure 5 illustrates in a side view the forming drum of figure 3 with a series of strip-like elements deposited;
- figure 6a shows an enlarged portion of the forming drum of figure 5 at a joint between strip-like elements;
- figure 6b illustrates the enlarged portion of figure 6a according to an alternative embodiment of the joint between strip-like elements;
- figures 7a-7f show respective sections of strip-like elements, wherein figures 7a, 7b and 7d are made in accordance with the present invention.

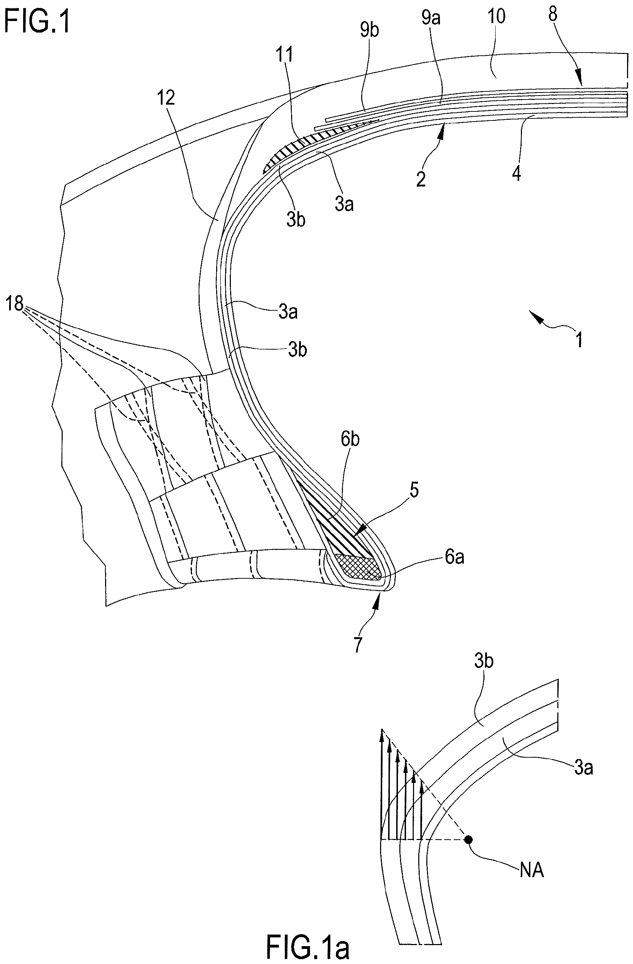

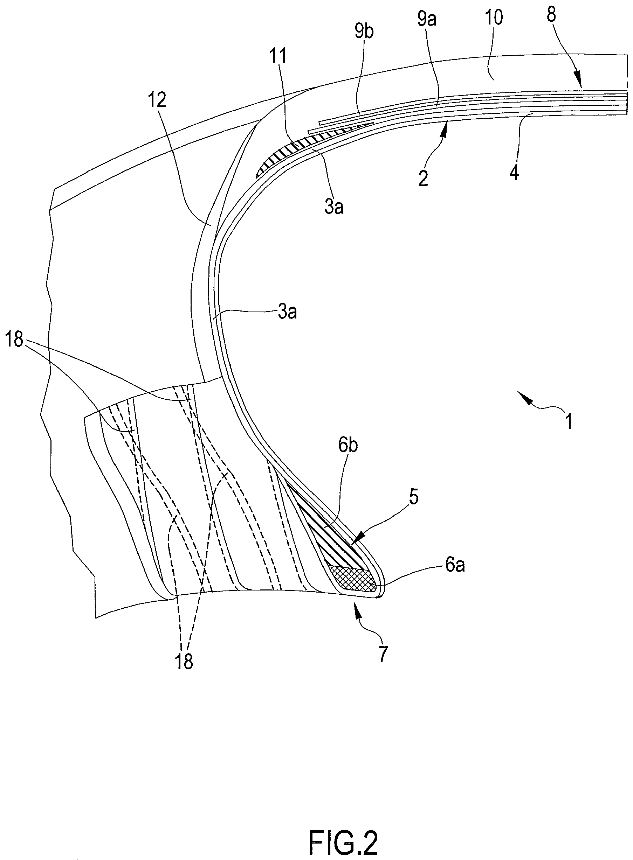

Reference number 1 indicates overall a tyre for vehicle wheels which comprises essentially a carcass structure 2 having at least one carcass ply 3a, 3b (figures 1 and 2). In the embodiment illustrated in figure 1, the tyre 1 has two superimposed carcass plies 3a, 3b. In the embodiment of figure 2, the tyre 1 has a single carcass ply 3a. A layer of waterproof elastomeric material or so called liner 4 can be internally applied to the carcass plies 3a, 3b. Two annular anchoring structures 5, each comprising a so called bead core 6a bearing an elastomeric filler 6b in radially outer position, are engaged with respective end flaps of the carcass ply or plies 3a, 3b. The annular anchoring structures 5 are integrated in the proximity of areas usually identified with the name of "beads" 7, at which the engagement between the tyre 1 and a respective mounting rim usually takes place. A belt structure 8 comprising one or more belt layers 9a, 9b is circumferentially applied around the carcass ply or plies 3a, 3b, and a tread band 10 is circumferentially superimposed on the belt structure 8. The belt structure 8 can be associated with so called "underbelt inserts" 11 each located between the carcass ply/plies 3a, 3b and one or the axially opposed terminal edges of the belt structure 8. In addition or in alternative to the underbelt inserts 11, annular inserts (not illustrated) in elastomeric material and/or comprising textile or metal cords substantially parallel to the circumferential development direction of the tyre (0-degree belt layer) or other reinforcement elements can be radially superimposed at least at axially opposed terminal edges of the belt layers 9a, 9b, and/or interposed between the same belt layers 9a, 9b, at least at said terminal edges. Two sidewalls 12, each extending from the respective bead 7 to a corresponding lateral edge of the tread band 10, are applied in laterally opposite positions on the carcass ply or plies 3a, 3b.

The building of the tyre 1 as described above, is carried out by assembling respective semi-finished products on a forming drum 13 by at least one assembling device. The tyre 1 thus built lends itself to being subjected to a vulcanisation treatment and/or other processes provided for in the work cycle. In the illustrated embodiment, at least one part of the components intended to form the carcass structure 2 of the tyre 1 is constructed and/or assembled on the forming drum 13. More in particular, the forming drum 2 lends itself to first receiving the possible liner 4, and subsequently the carcass plies 3a, 3b. Subsequently, devices not illustrated coaxially engage one of the annular anchoring structures 5 around each of the end flaps, position an outer sleeve comprising the belt structure 8 and the tread band 10 in a coaxially centred position around the carcass cylindrical sleeve and shape the carcass sleeve according to a toroidal configuration by means of a radial dilatation of the carcass ply or plies 3a, 3b, such as to determine the application thereof on a radially inner surface of the outer sleeve.

Each of the carcass plies 3a, 3b is obtained my means of a deposition unit, per se known and therefore not illustrated, which is arranged to applying a plurality of strip-like elements 14 in a circumferential side by side relationship, with partial overlap as will be later described in detail, on a deposition surface 15 radially external with respect to the forming drum 13, so as to form each carcass ply 3a, 3b having a continuous circumferential development around the geometric axis "X-X" of said forming drum 13.

The mentioned deposition surface 15 can be the radially external surface of the forming drum 13 or, preferably, the radially external surface exhibited by components of the tyre 1 already deposited on said forming drum 13, such as for example the liner 4. The radially external deposition surface 15 of the forming drum 2 illustrated is substantially cylindrical and lends itself to the realization of a cylindrical carcass sleeve. The forming drum 13 is located and rotatably supported around its geometric axis "X-X". Devices, not illustrated, for example in the form of spindle moved by a motor, serve to rotate the forming drum 2 around said geometric axis "X-X". The deposition unit is mounted next to the forming drum 13 and it is adapted to applying the strip-like elements 14 on said forming drum 13 during the rotation of the latter. Preferably, the forming drum 13 is made to rotate in a step-wise manner: for example, the deposition unit applies a strip-like element 14 after each step. The strip-like elements 14 are obtained by means of cutting operations sequentially carried out on at least a continuous elongated element coming from a drawing and/or calendering device or from a supply reel on which it has been previously wound and they all preferably have the same width, preferably comprised between about 10 mm and about 400 mm, for example comprised between 25 mm and about 80 mm. The continuous elongated element and consequently the strip-like elements 14 obtained therefrom each have a plurality of cords 15a, 15b or similar thread-like elements made of a preferably textile material, extending parallel to each other along the longitudinal development of the elongated element and of the strip-like element itself 14, and at least partially coated with a layer of elastomeric material 16.

The continuous elongated element is obtained by laying the first cords15a belonging to the central portions of the strip-like elements 14 and the second end cords 15b in a side by side relationship in the proper disposition and by applying the elastomeric material on said cords 15a, 15b by means of a drawing and/or calendering operation. During such operation, the first cords 15a and the second cords 15b are subject to a pull corresponding to a processing elongation "w%" which is usually comprised between about 0.5% and about 2%.

Advantageously the use of first cords 15a and second cords 15b with similar elastic moduli for elongations/stretches typical of rubberizing allows avoiding that, during the rubberizing itself, the first cords extend in a different manner
from the second cords giving rise, once the tension on the same cords is released, to irregular elongated elements, for example with longitudinal edges provided with unacceptable undulations.

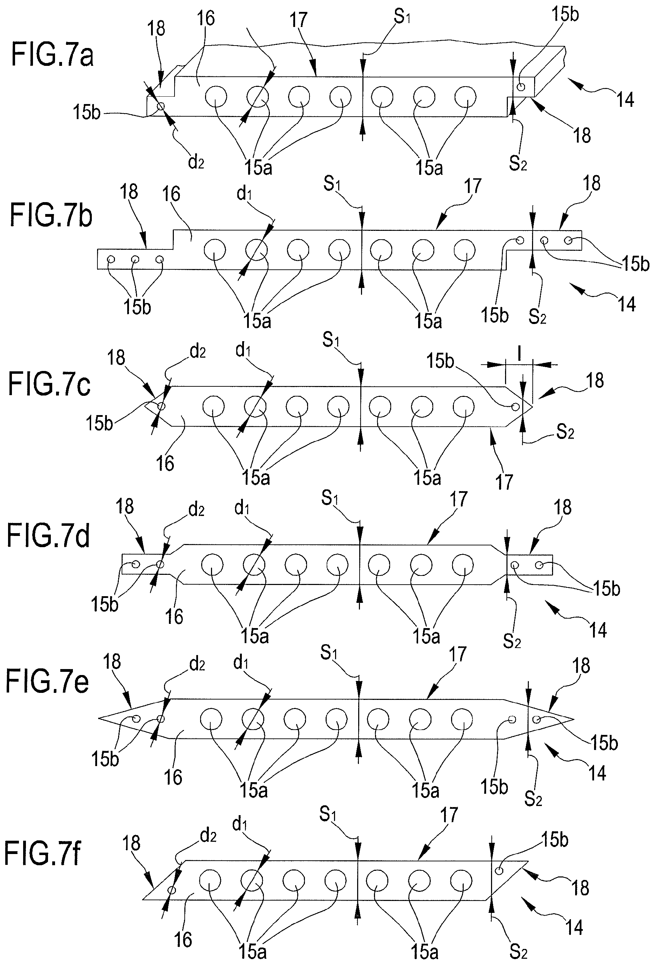

With particular reference to figures 7a-7f, the continuous elongated element and each strip-like element 14 cut by the same have, in a cross section with respect to the longitudinal development of the same, a shape having the opposite ends of reduced thickness, thinned and/or tapered. A central part 17 of the strip-like element 14 has a thickness "S1" preferably constant along the width of the strip-like element 14, preferably comprised between about 0,6 mm and about 2,5 mm, more preferably comprised between about 0,9 mm and about 1,8 mm. The strip-like element 14 comprises two lateral longitudinal portions 18 each having a reduced thickness "S2" with respect to the thickness "S1" of the central part 17. The reduced thickness "S2" is preferably comprised between about 40% and about 95% of "S1", more preferably comprised between about 50% and about I'85% of "S1".

In the central part 17 first cords 15a are embedded disposed in a side by side relationship with respect to each other and spaced apart. Preferably but not necessarily, the first cords 15a are all arranged on a same plane. In each of the due lateral longitudinal portions 18 are embedded one or more second cords 15b arranged in a side by side relationship with respect to each other and spaced apart. Preferably but not necessarily, the second cords 15b of a single lateral longitudinal portion 18 are all arranged on a same plane.

Each of the first cords 15a has a first average diameter "d1" greater than a second average diameter "d2" of each of the second cords 15b. By way of example, the second average diameter "d2" of a second cord 15b is comprised between about 40% and about 95% of the first average diameter "d1" of a first cord 15a, more preferably it is comprised between about 50% and about 85%. For example, a second cord 15b exhibits a second average diameter "d2" comprised between about 0,4 mm and about 1 mm. A first cord 15a exhibits for example a first average diameter "d1" comprised between about 0.55 mm and about 1.2 mm. The first cords 15a belonging to the central portions of the strip-like elements 14 and the second end cords 15b can be obtained with the same material(s) or with different material(s). Preferably, the first cords 15a and the second cords 15b are made of Rayon or Nylon, or Polyester or hybrid fabrics.

Preferably and independently from the material used, a first cord 15a and a second cord 15b used to make a determined strip-like element 14 have respective diagrams of *"load*/*percentage elongation"* which are very close or substantially superimposed in the section of deformations (typically comprised between about 0,5% and about 2% of elongation) occurring during the production of the continuous elongated element (drawing, calendering).

According to the embodiment of the invention of figure 7a, the lateral longitudinal portions 18 have a reduced and constant thickness "S2" and are joined to the central part 17 through a step. The shape of the cross section of figure 7a is asymmetrical. In fact, one of the two lateral longitudinal portions 18 is shifted towards an upper (lower) face of the strip-like element 14 while the other lateral longitudinal portion 18 is shifted towards a lower (upper) face of the same strip-like element 14. In other words, one of the two substantially flat (upper or lower) faces of the strip-like element 14 is borne by the central part 17 and by one of the two lateral longitudinal portions 18 while the other (lower or upper) face of the same strip-like element 14 is borne by the central part 17 and by the other of the two lateral longitudinal portions 18. Each of the lateral longitudinal portions 18 has a single second cord 15b. The embodiment of the invention of figure 7b is similar to that of figure 7a but each of the two lateral longitudinal portions 18 has three second cords 15b in a side by side relationship and arranged on a same plane.

In the embodiment of figure 7c, which is not part of the present invention, the two lateral longitudinal portions 18 as seen in cross section have the shape of an isosceles triangle with the basis joined to the central part 17. The sides of the triangle are directly connected to the two faces of the central part 17 and do not form a step. In this case, the thickness "S2" of each of said lateral longitudinal portions 18 is intended as average thickness for example obtained by dividing the triangle surface by the width "I" of the lateral longitudinal portion 18. Each of the two lateral longitudinal portions 18 contains a single second cord 15b. The shape of the cross section of figure 7c is symmetrical. The embodiment of figure 7e, which is not part of the present invention, is similar to that of figure 7c but each of the two lateral longitudinal portions 18 exhibits two second cords 15b in a side by side relationship and arranged on a single plane. In the embodiment of the invention of figure 7d each of the lateral longitudinal portions 18 exhibits a first section with a reduced and constant thickness "S2" and ends with a triangle-like tapering. Moreover, each of the lateral longitudinal portions 18 is equidistant from the opposite faces of the central part 17 of the strip-like element 14 and joined to the same by two inclined steps. The shape of the cross section of figure 7e is therefore symmetrical. Each of the two lateral longitudinal portions 18 exhibits two second cords 15b in a side by side relationship and arranged on a single plane.

In the embodiment of figure 7f, which is not part of the present invention, each of the lateral longitudinal portions 18 is tapered like a right-angled triangle with one of the legs joined to the central part 17. In other words, one face of the strip-like element 14 is connected to the other by means of an inclined side forming with said faces an angle different from 90°. The two inclined sides of the two lateral longitudinal portions 18 are parallel to each other. The shape of the cross section of figure 7f is therefore asymmetrical. Each of the two lateral longitudinal portions 18 exhibits a single second cord 15b.

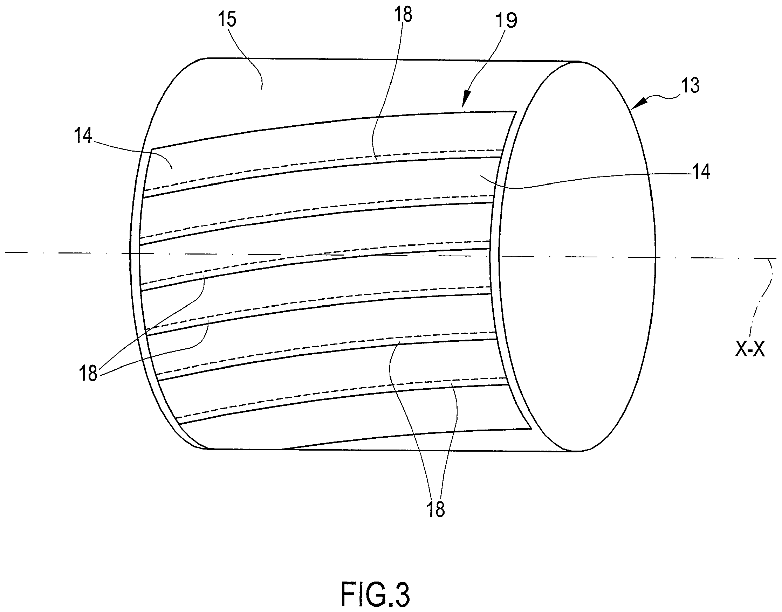

During deposition, each strip-like element 14 is deposited on the forming drum 13 or on a radially outer surface with respect to the forming drum 13 by applying a lateral longitudinal portion 18 thereof on the lateral longitudinal portion 18 of the adjacent strip-like element 14 (figures 3, 5, 6a and 6b) so as to superimpose them, also preferably superimposing the second cords 15b along respective radial directions. The thickness and the shape of the lateral longitudinal portions 18 are such that the thickness of the joint is overall substantially equal to the thickness "S1" of the central part 17 of the strip-like element 14.

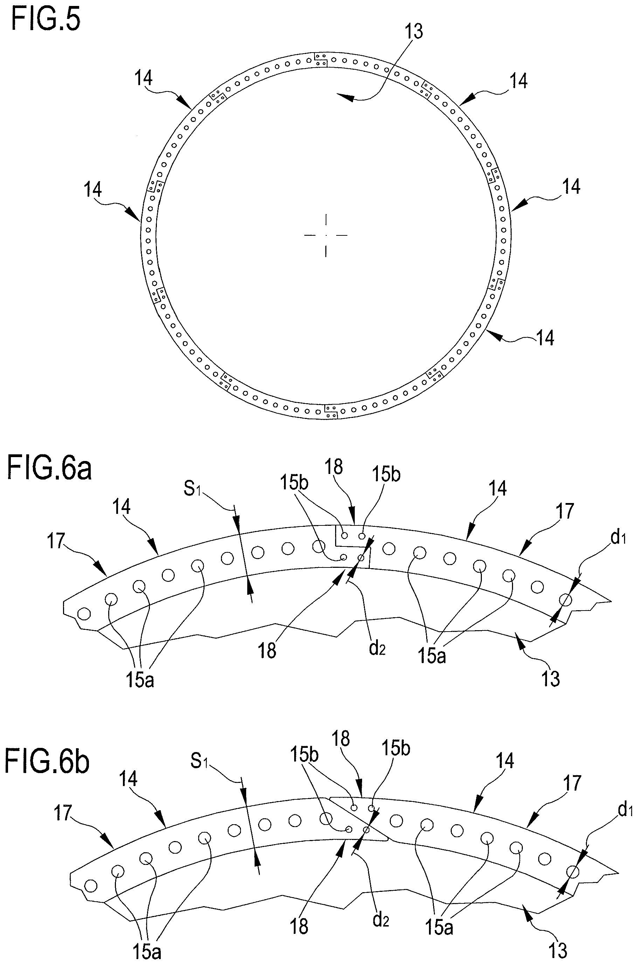

In figures 5 and 6a the forming drum 13 is illustrated, on which strip-like elements 14 have been deposited, similar to those of figures 7a and 7b although provided with two second cords 15b. In figure 6b the forming drum 13 is illustrated, on which strip-like elements 14 like that of figure 7f have been deposited.

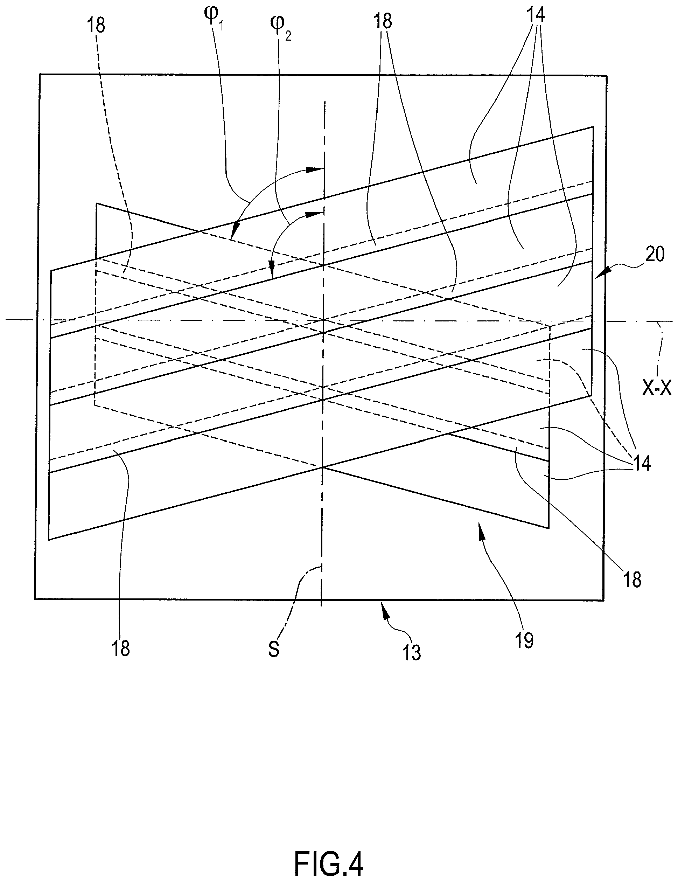

According to an embodiment illustrated in the accompanying drawings (figures 1 and 4), the deposition unit deposits a first layer 19 of strip-like elements 14 on the forming drum 13 and a second layer 20 of strip-like elements 14 on the first layer 19 so as to form respective carcass plies 3a, 3b. The two layers 19, 20 and the carcass plies deriving therefrom 3a, 3b are crossed in the sense that the first cords 15a belonging to the central portions of the strip-like elements 14 and the second end cords 15b forming part of one of the layers are crossed with the cords 15a, 15b of the other layer. It follows that also the joints formed by the superimposed lateral longitudinal portions 18 are crossed. The direction defined by the longitudinal development of the strip-like elements 14 and parallel to which the cords 15a, 15b extends forms with a circumferential direction "S" of the drum 13 (and of the finished tyre 1) an inclination angle "ϕ" different from 90°. Such an angle "ϕ1" formed by the strip-like elements 14 of the first layer 19 is for example comprised between about 70° and about 88°. The angle "ϕ2" formed by the strip-like elements 14 of the second layer 20 is for example comprised between about 92° and about 110°. In a preferred embodiment, "ϕ1" is about 87° and "ϕ2" is about 93°. More in general, "ϕ" is comprised between about 60° and about 120°. The two annular anchoring structures 5 are engaged to respective end flaps of the carcass plies 3a, 3b turning up said end flaps around said annular anchoring structures 5 themselves. Depending on the axial width of the ply, each of the axially opposite edges of the same is arranged, in the moulded and vulcanised tyre 1, at the annular anchoring structure 5, alongside the bead core 5a and/or the filler 5b, or in a radially outer area with respect to the above mentioned annular anchoring structure 5, at the radially innermost portion of the sidewall 12.

In the embodiment of figure 4, the axial development of the first layer 19 is smaller than the axial development of the second layer 20. Moreover (figure 1), the axial development of such first and second layer 19, 20 is such that, after the end flaps of the carcass plies 3a, 3b are turned up around the annular anchoring structures 5, said end flaps only develop for the radial height of the respective annular anchoring structure 5 without being interposed between the sidewall 12 and the innermost carcass structure. In such embodiment, the superimposed ply layers arranged at the sidewalls 12 of the tyre 1 each belong to one of the two carcass plies 3a, 3b each extending from a bead 7 to the opposite bead.

According to a different embodiment illustrated in the attached drawings (figures 2 and 3), the deposition unit deposits only one layer 19 of strip-like elements 14 on the forming drum 13 to form only one carcass ply 3a. Also in this embodiment, the direction defined by the longitudinal development of the strip-like elements 14 and parallel to which the cords 15a, 15b extend, forms with the circumferential direction "S" of the drum 13 an angle of inclination "ϕ" preferably different from 90°, preferably comprised between about 60° and about 120°, more preferably comprised between about 70° and about 110°, more preferably about 87°. In such an embodiment, the axial development of the layer 19 is greater than the axial development of the layers 19, 20 of the embodiment of figures 1 and 4 and such that, after the end flaps of the single carcass ply 3a are turned up around the annular anchoring structures 5, the end flaps develop for the entire radial height of the sidewall of the tyre 1 until they reach the tread band 10. In such embodiment, the superimposed ply layers arranged at the sidewalls 12 of the tyre 1 both belong to the same carcass ply 3a. The axially outermost layer is the turned up flap. Due to the inclination "ϕ" different from 90°, the joints formed by the lateral longitudinal portions 18 of the innermost layer are crossed with the joints formed by the lateral longitudinal portions 18 of the outermost layer (turned up flap). In one embodiment, not illustrated, the deposition unit deposits a first layer 19 of strip-like elements 14 and a second layer 20 of strip-like elements 14 but, differently from what is shown in figures 1 and 4, these layers both have an inclination angle "ϕ" of 90° and the joints of a layer are circumferentially staggered with respect to the joints of the other layer. Preferably, the sum of the longitudinal elasticity module "E2op%", measured at an elongation "op%" corresponding to the working conditions of the tyre 1, of two superimposed second end cords 15b (in the joint) is less than or equal to about 1.5 times the modulus of elasticity "E1op%" of a first cord 15a belonging to the central portion of the strip-like element 14 at the same elongation. Preferably, the sum of the longitudinal elasticity module "E2op%", measured at an elongation "op%" corresponding to the working conditions of the tyre 1, of two superimposed second end cords 15b is substantially equal to the modulus of elasticity "E1op%" of a first cord 15a belonging to the central portion of the strip-like element 14 at the same elongation. In accordance with a method for optimizing the distribution of loads in the carcass structure of a tyre which is not part of the present invention, the neutral axis of the radial section of the sidewall of the tyre 1 is maintained inside said tyre 1 and outside the carcass structure 2 of the tyre 1 during the working conditions due to the fact that the thickness of the carcass structure 2 at the sidewall is kept within certain limits. This is to avoid generating overlap areas between adjacent strip-like elements 14 (joints) with a greater thickness then the rest of the ply. In fact, the method provides for superimposing a lateral longitudinal portion 18 of each strip-like element 14 on a lateral longitudinal portion 18 of an adjacent strip-like element 14 in order to form the joint and, since each lateral longitudinal portion 18 comprises at least one second end cord 15b with an average diameter smaller than the first cords 15a belonging to central portions 17 of the strip-like elements 14 and since the opposite lateral longitudinal ends 18 are thinned, the joints have a thickness that is substantially equal to the thickness of the central portions 17. As can be seen in the schematic representation of figure 1a, the neutral axis "NA" remains located inside the tyre 1 and is furthermore located outside the carcass plies 3a, 3b so that all the cords 15a, 15b belonging to said carcass plies 3a, 3b work properly under tension.

The risk that, in particular load situations, the layer of the axially inner ply located on the sidewall no longer works properly is drastically reduced.

## Claims

1. Tyre for vehicle wheels, comprising:
a carcass structure (2) comprising at least one carcass ply (3a, 3b) formed by a plurality of strip-like elements (14) in circumferential side by side relationship, wherein axially opposite end flaps of said at least one carcass ply (3a, 3b) are engaged to respective annular anchoring structures (5), wherein a lateral longitudinal portion (18) of each strip-like element (14) is superimposed on a lateral longitudinal portion (18) of an adjacent strip-like element (14) such as to form a joint, wherein at least at the sidewalls (12) of the tyre (1), said at least one carcass ply (3a, 3b) forms two superimposed layers;
a belt structure (8) located in a radially external position with respect to the carcass structure (2);
a tread band (10) located in a radially external position with respect to the belt structure (8);
wherein each strip-like element (14) comprises a plurality of first cords (15a) in a side by side relationship, located in a central part of the strip-like element (14) and each exhibiting a first average diameter (d1);
wherein each of the lateral longitudinal portions (18) of each strip-like element (14) exhibits a reduced thickness (S2) with respect to a thickness (S1) of the central part (17) of the strip-like element (14);
wherein each of the lateral longitudinal portions (18) of each strip-like element (14) comprises at least one second end cord (15b) with a second average diameter (d2) that is smaller than said first average diameter (d1),
the respective joint exhibiting a thickness that is substantially equal to the thickness (S1) of the central part (17) of the strip-like element (14);
wherein each of the lateral longitudinal portions (18) exhibits, in a transversal section to the longitudinal development of the strip-like element (14), at least a connecting step between the respective lateral longitudinal portion (18) and the central part (17) of said strip-like element (14);
wherein the step is one on each longitudinal portion (18), the two longitudinal portions (18) of a single strip-like element (14) being asymmetric.

2. The tyre of claim 1, wherein each strip-like element (14) exhibits a width comprised between 10 mm and 400 mm.

3. The tyre of claim 1, wherein each strip-like element (14) exhibits a maximum thickness, measured in the central part (17), comprised between 0.6 mm and 2.5 mm.

4. The tyre of claim 1, wherein the density of the first cords (15a) in the strip-like element (14) is comprised between 45 cords/dm and 150 cords/dm.

5. The tyre of claim 1, wherein the first cords (15a) and the second cords (15b) are manufactured using a same material.

6. The tyre of claim 1, comprising two carcass plies (3a, 3b).

7. The tyre of claim 6, wherein the layers of superimposed carcass plies located at the sidewalls (12) each belong to one of the two carcass plies (3a, 3b) which are radially superimposed and which each extends from a bead (7) to the opposite bead.

8. The tyre of claim 1, wherein the axially opposite end flaps of said at least one carcass ply (3a, 3b) lie turned-up and facing against said carcass ply (3a, 3b) at the sidewalls (12) such as to form said two superimposed layers.

9. The tyre of claim 8, wherein each end flap of the carcass ply (3a, 3b) is borne on the sidewall (12) and rested against the same carcass ply (3a, 3b) of which it is a part, extending up to the tread band.

10. The tyre of claim 1, wherein the thickness of the lateral longitudinal portion (18) delimited by said step is preferably comprised between about 40% and about 95% of the thickness of the central part (17) of the strip-like element (14).

11. The tyre of claim 1, wherein a second cord (15b) exhibits a second average diameter (d2) comprised between 40% and 95% of the first average diameter (d1) of a first cord.

12. The tyre of claim 1, wherein a second end cord (15b) exhibits an average diameter comprised between 0.4 mm and 1 mm.

13. The tyre of claim 1, wherein a first cord (15a) belonging to the central part (17) of the strip-like element (14) exhibits an average diameter comprised between 0.55 mm and 1.2 mm.

14. The tyre of claim 1, wherein the first cords (15a) and the second cords (15b) form an angle (ϕ), with respect to a circumferential direction (S) of the tyre (1), comprised between 60° and 120°.

15. The tyre of claim 1, wherein each of the lateral longitudinal portions (18) exhibits, in a transversal section to the longitudinal development of the strip-like element (14), a triangular tapered profile.

## Patentansprüche

1. Reifen für Fahrzeugfelgen, umfassend:
Eine Karkassenkonstruktion (2) umfassend mindestens eine Karkassenlage (3a, 3b) gebildet durch eine Vielzahl von streifenartigen Elementen (14) in umlaufender Seite-an-Seite Anordnung, wobei axial gegenüberliegende Endlappen der genannten mindestens einen Karkassenlage (3a, 3b) an entsprechenden annularen Verankerungsstrukturen (5) eingehängt sind, wobei ein lateraler longitudinaler Teil (18) jedes streifenartigen Elements (14) mit einem lateralen longitudinalen Teil (18) eines anliegenden streifenartigen Elements (14) so überlagert, dass ein Anschluss gebildet wird, wobei mindestens eine der Seitenwände (12) des Reifens (1) mit der genannten mindestens einen Karkassenlage (3a, 3b) zwei überlagerte Schichten bildet;
eine Bandstruktur (8) in einer radial externen Position relativ zu der Karkassenkonstruktion (2);
ein Laufband (10) in einer radial externen Position relativ zur Bandstruktur (8);
wobei jedes streifenartige Element (14) eine Vielzahl von ersten Fäden (15a) in einer Seite-an-Seite-Anordnung in einem zentralen Teil des streifenartigen Elements (14)umfasst und wobei jedes einen ersten Durchschnittsdurchmesser (d1) aufweist;
wobei jeder der lateralen longitudinalen Teile (18) eines jeden streifenartigen Elements (14) eine reduzierte Dicke (S2) relativ zu einer Dicke (S1) des zentralen Teils (17) des streifenartigen Elements (14) aufweist;
wobei jeder der lateralen longitudinalen Teile (18) eines jeden streifenartigen Elements (14) mindestens einen zweiten Endfaden (15b) mit einem zweiten Durchschnittsdurchmesser (d2) umfasst, der kleiner ist als der genannte erste Durchschnittsdurchmesser (d1),
Wobei der entsprechende Anschluss eine Dicke aufweist, die im Wesentlichen der Dicke (S1) des zentralen Teils (17) des streifenartigen Elements (14) entspricht;
wobei jeder der lateralen longitudinalen Teile (18) in einem der longitudinalen Entwicklung des streifenartigen Elements (14) transversalen Abschnitt mindestes einen Verbindungsabstufung zwischen dem entsprechenden lateralen longitudinalen Teil (18) und dem zentralen Zeil (17) des genannten streifenartigen Elements (14) aufweist;
wobei die Abstufung einer ist auf jedem longitudinalen Teil (18), wobei die zwei longitudinalen Teile (18) eines einzelnen streifenartigen Elements (14) asymmetrisch sind.

2. Der Reifen nach Anspruch 1, wobei jedes streifenartige Element (14) eine Breite zwischen 10 mm und 400 mm aufweist.

3. Der Reifen nach Anspruch 1, wobei jedes streifenartige Element (14) eine maximale Dicke, die im zentralen Teil (17) gemessen wird, von 0,6 mm bis 2,5 mm aufweist.

4. Der Reifen nach Anspruch 1, wobei die Dichte des ersten Fadens (15a) im streifenartigen Element (14) zwischen 45 Fäden/dm und 150 Fäden/dm liegt.

5. Der Reifen nach Anspruch 1, wobei der erste Faden (15a) und der zweite Faden (15b) aus dem gleichen Material hergestellt werden.

6. Der Reifen nach Anspruch 1 umfassend zwei Karkassenlagen (3a, 3b).

7. Der Reifen nach Anspruch 6, wobei die Schichten sich überlagernder Karkassenlagen an den Seitenwänden (12) jeweils zu einer der zwei Karkassenlagen (3a, 3b) gehören, die radial überlagert sind und von einer Wulst (7) zur gegenüberliegenden Wulst reichen.

8. Der Reifen nach Anspruch 1, wobei die axial gegenüberliegenden Endlappen der genannten mindesten einen Karkassenlage (3a, 3b) umgedreht liegen und gegen die genannte Karkassenlage (3a, 3b) an den Seitenwänden (12) anliegen, sodass die genannten zwei überlagerten Schichten entstehen.

9. Der Reifen nach Anspruch 8, wobei jeder Endlappen der Karkassenlage (3a, 3b) der Seitenwand (12) entspringt und gegen die Karkassenlage (3a, 3b), von der dieser ein Teil ist, ruht und bis zur Laufwulst reicht.

10. Der Reifen nach Anspruch 1, wobei die Dicke des lateralen longitudinalen Teils (18), begrenzt durch die genannte Abstufung bevorzugt zwischen ungefähr 40 % und ungefähr 95 % der Dicke des zentralen Teils (17) des streifenartigen Elements (14) ist.

11. Der Reifen nach Anspruch 1, wobei ein zweiter Faden (15b) einen zweiten Durchschnittsdurchmesser (d2) zwischen 40 % und 95 % des ersten Durchschnittsdurchmessers (d1) eines ersten Fadens aufweist.

12. Der Reifen nach Anspruch 1, wobei ein zweiter Endfaden (15b) einen Durchschnittsdurchmesser zwischen 0,4 mm und 1 mm aufweist.

13. Der Reifen nach Anspruch 1, wobei ein erster Faden (15a) des zentralen Teils (17) des streifenartigen Elements (14) einen Durchschnittsdurchmesser zwischen 0,55 mm und 1,2 mm aufweist.

14. Der Reifen nach Anspruch 1, wobei die ersten Fäden (15a) und die zweiten Fäden (15b) einen Winkel (ϕ) relativ zur Umlaufrichtung (S) des Reifens (1) zwischen 60° und 120° bilden.

15. Der Reifen nach Anspruch 1, wobei jeder der lateralen longitudinalen Teile (18) in einem zur longitudinalen Entwicklung des streifenartigen Elements (14) transversalen Abschnitt ein dreieckig zulaufendes Profil aufweisen.

## Revendications

1. Pneumatique pour roues de véhicule, comprenant :
une structure de carcasse (2) comprenant au moins un pli (3a, 3b) formée par une pluralité d'éléments en forme de bandes (14) en relation circonférentielle côte à côte,
dans laquelle des rabats d'extrémité axialement opposés dudit au moins un pli de carcasse (3a, 3b) sont engagés sur des structures d'ancrage annulaires respectives (5), une partie longitudinale latérale (18) de chaque élément en forme de bande (14) étant superposée à une partie longitudinale latérale (18) d'un élément en forme de bande adjacent (14) de manière à former un joint, dans lequel au moins au niveau des flancs (12) du pneumatique (1), ledit au moins un pli (3a, 3b) forme deux couches superposées ;
une structure de ceinture (8) placée dans une position radialement externe par rapport à la structure de carcasse (2) ;
une bande de roulement (10) placée dans une position radialement externe par rapport à la structure de ceinture (8) ;
dans laquelle chaque élément en forme de bande (14) comprend une pluralité de premiers câblés (15a) placés côte à côte dans une partie centrale de l'élément en forme de bande (14) présentant chacun un premier diamètre moyen (d1) ;
dans laquelle chacune des parties longitudinales latérales (18) de chaque élément en forme de bande (14) présente une épaisseur réduite (S2) par rapport à une épaisseur (S1) de la partie centrale (17) de l'élément en forme de bande (14) ;
dans laquelle chacune des parties longitudinales latérales (18) de chaque élément en forme de bande (14) comprend au moins un deuxième câblé d'extrémité (15b) avec un deuxième diamètre moyen (d2) inférieur audit premier diamètre moyen (d1),
le joint respectif présentant une épaisseur sensiblement égale à l'épaisseur (S1) de la partie centrale (17) de l'élément en forme de bande (14) ;
dans laquelle chacune des parties longitudinales latérales (18) présente, dans une section transversale par rapport au développement longitudinal de l'élément en forme de bande (14), au moins un épaulement de connexion entre la partie longitudinale latérale respective (18) et la partie centrale (17) dudit élément en forme de bande (14) ;
dans laquelle il existe un épaulement sur chaque partie longitudinale (18), les deux parties longitudinales (18) d'un seul élément en forme de bande (14) étant asymétriques.

2. Pneumatique selon la revendication 1, dans lequel chaque élément en forme de bande (14) présente une largeur comprise entre environ 10 mm et 400 mm.

3. Pneumatique selon la revendication 1, dans lequel chaque élément en forme de bande (14) présente une épaisseur maximale, mesurée dans la partie centrale (17), comprise entre 0,6 mm et 2,5 mm.

4. Pneumatique selon la revendication 1, dans lequel la densité des premiers câblés (15a) dans l'élément en forme de bande (14) est comprise entre 45 câbles/dm et 150 câbles/dm.

5. Pneumatique selon la revendication 1, dans lequel les premiers câblés (15a) et les deuxièmes câblés (15b) sont fabriqués dans le même matériau.

6. Pneumatique selon la revendication 1, comprenant deux plis de carcasse (3a, 3b).

7. Pneumatique selon la revendication 6, dans lequel les couches de plis de carcasse superposées situées sur les flancs (12) appartiennent chacune à l'un des deux plis de carcasse (3a, 3b) qui se superposent radialement et s'étendent chacune d'un bourrelet (7) au bourrelet opposé.

8. Pneumatique selon la revendication 1, dans lequel les rabats d'extrémité axialement opposés dudit au moins un pli de carcasse (3a, 3b) sont relevés et tournés contre ledit pli de carcasse (3a, 3b) au niveau des flancs (12) de manière à former lesdites deux couches superposées.

9. Pneumatique selon la revendication 8, dans lequel chaque rabat d'extrémité du pli de carcasse (3a, 3b) est porté sur le flanc (12) et s'appuie contre le même pli de carcasse (3a, 3b) dont il fait partie, s'étendant jusqu'à la bande de roulement.

10. Pneumatique selon la revendication 1, dans lequel l'épaisseur de la partie longitudinale latérale (18) délimitée par ledit épaulement est de préférence comprise entre environ 40 % et environ 95 % de l'épaisseur de la partie centrale (17) de l'élément en forme de bande (14).

11. Pneumatique selon la revendication 1, dans lequel un deuxième câblé (15b) présente un deuxième diamètre moyen (d2) compris entre environ 40 % et environ 95 % du premier diamètre moyen (d1) d'un premier câblé.

12. Pneumatique selon la revendication 1, dans lequel un deuxième câblé d'extrémité (15b) présente un diamètre moyen compris entre 0,4 mm et 1 mm.

13. Pneumatique selon la revendication 1, dans lequel un premier câblé (15a) appartenant à la partie centrale (17) de l'élément en forme de bande (14) présente un diamètre moyen compris entre 0,55 mm et 1,2 mm.

14. Pneumatique selon la revendication 1, dans lequel les premiers câblés (15a) et les deuxièmes câblés (15b) forment un angle (ϕ) respectivement à une direction circonférentielle (S) du pneumatique (1) compris entre 60° et 120°.

15. Pneumatique selon la revendication 1, dans lequel chacune des parties longitudinales latérales (18) présente, dans une section transversale du développement longitudinal de l'élément en forme de bande (14), un profil conique triangulaire.
